(19) Europäisches Patentamt European Patent Office Office européen des brevets

(11) **EP 4 538 637 A1**

(12) **EUROPEAN PATENT APPLICATION**

(43) Date of publication:
16.04.2025 Bulletin 2025/16

(21) Application number: 24194761.3

(22) Date of filing: 15.08.2024

(51) International Patent Classification (IPC):
**G01C 13/00** (2006.01) **G01W 1/10** (2006.01)

(52) Cooperative Patent Classification (CPC):
**G01C 13/00; G01W 1/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 12.10.2023 KR 20230135874

(71) Applicant: **Korea Institute of Ocean Science Technology**
**Busan 49111 (KR)**

(72) Inventors:
• **LEE, Moonjin**
**3403 DAEJEON (KR)**
• **KIM, Tae Sung**
**35209 DAEJEON (KR)**
• **KIM, Yong Myung**
**34847 DAEJEON (KR)**

(74) Representative: **EP&C**
**P.O. Box 3241**
**2280 GE Rijswijk (NL)**

(54) **APPARATUS AND METHOD FOR ESTIMATING TIDAL FRONTS**

(57) Disclosed is an apparatus and method for estimating tidal fronts. The method for estimating tidal fronts includes obtaining past observation data of a sea area to be estimated, substituting and calculating the obtained past observation data into a preset whole water depth mixing discriminant for a plurality of points in the sea area to be estimated, and as a result of the calculation, regarding an area of points where a calculated value is less than or equal to a preset reference value as a whole water depth mixing sea area, regarding an area of points where the calculated value exceeds the preset reference value as a stratified sea area, and estimating a boundary between the regarded whole water depth mixing sea area and stratified sea area as a tidal front.

FIG. 1

EP 4 538 637 A1

## EP 4 538 637 A1

**Description**

CROSS REFERENCE TO RELATED APPLICATION

The present application claims priority to Korean Patent Application No. 10-2023-0135874, filed October 12, 2023, the entire contents of which are incorporated herein for all purposes by this reference.

BACKGROUND

Technical Field

The present disclosure relates to an apparatus and method for estimating tidal fronts.

Description of Related Technology

Frontal sea areas developed by tides in the ocean are rich in nutrient salts due to active vertical mixing. Accordingly, the productivity of fishery products is high in frontal sea areas because of the abundance of fishery resources.
In sea areas where the tidal currents are fast and the water depth is shallow, the bottom mixed layer caused by tidal currents is thick and thus overlaps with the surface mixed layer caused by winds. As the mixed layers at the surface and bottom overlap in this way, mixing occurs at the whole water depth. Since there are sea areas where whole water depth mixing does not occur on the outskirts of the sea areas where mixing occurs at the whole water depth, tidal fronts develop between the whole water depth mixing sea areas and the outskirt sea areas.
In general, a method of finding a tidal front is to regard a sea area where the water temperatures at the whole water depth are similar at a certain level as a whole water depth mixing sea area by comparing the water temperatures at the whole water depth, and to regard the area between the regarded whole water depth mixing sea area and the outskirt sea area as a tidal front. It is necessary to observe the water temperatures at the whole water depth for a search target sea area for this purpose, which takes a lot of time and costs.

Prior Art Literature

Patent Document

Korean Patent Application Publication No. 10-2023-0055765 (April 26, 2023.)

SUMMARY

The present disclosure is intended to provide an apparatus and method for estimating tidal fronts for estimating whole water depth mixing sea areas and tidal fronts by using a tidal current numerical model derived from the relationship between flow velocities of tidal currents and water depths and past observation data.
According to one aspect of the present disclosure, a method of estimating a tidal front, performed by an apparatus for estimating a tidal front, is disclosed.
The method of estimating a tidal front in accordance with an embodiment of the present disclosure includes obtaining past observation data of a sea area to be estimated, substituting and calculating the obtained past observation data into a preset whole water depth mixing discriminant for a plurality of points in the sea area to be estimated, and as a result of the calculation, regarding an area of points where a calculated value is less than or equal to a preset reference value as a whole water depth mixing sea area, regarding an area of points where the calculated value exceeds the preset reference value as a stratified sea area, and estimating a boundary between the regarded whole water depth mixing sea area and stratified sea area as a tidal front.
The obtained past observation data includes a coefficient of friction of a seafloor in the sea area to be estimated, a reference density before a temperature change, a specific heat, a contribution rate, a volume expansion coefficient, and a rate of change of a quantity of heat absorbed per unit area.
The whole water depth mixing discriminant is set by the following mathematical expression, which is a relational expression between a flow velocity of a tidal current and a water depth:

$$\frac{h}{u^3}$$

Here, h is the water depth and u is the flow velocity of the tidal current.

The calculated value of the whole water depth mixing discriminant is calculated by the following mathematical expression:

$$\frac{h}{u_0^3} = -\frac{8k\rho_0 C_p \epsilon}{3\pi\alpha g \, {}^{dQ}\!/\!{}_{dt}}.$$

Here, k is a coefficient of friction of a seafloor, $\rho_0$ is a reference density before a temperature change, $C_p$ is a specific heat, $\epsilon$ is a contribution rate, $\alpha$ is a volume expansion coefficient, g is a gravitational acceleration, and dQ/dt is a rate of change of a quantity of heat absorbed per unit area.

According to another aspect of the present disclosure, an apparatus for estimating a tidal front is disclosed.

The apparatus for estimating a tidal front in accordance with an embodiment of the present disclosure includes a memory configured to store instructions and a processor configured to execute the instructions, wherein the instructions perform a method of estimating a tidal front including obtaining past observation data of a sea area to be estimated, substituting and calculating the obtained past observation data into a preset whole water depth mixing discriminant for a plurality of points in the sea area to be estimated, and as a result of the calculation, regarding an area of points where a calculated value is less than or equal to a preset reference value as a whole water depth mixing sea area, regarding an area of points where the calculated value exceeds the preset reference value as a stratified sea area, and estimating a boundary between the regarded whole water depth mixing sea area and stratified sea area as a tidal front.

The apparatus and method for estimating tidal fronts in accordance with the embodiments of the present disclosure can estimate tidal fronts relatively easily and quickly without having to perform observations directly in the ocean by estimating whole water depth mixing sea areas and tidal fronts using a tidal current numerical model derived from the relationship between flow velocities of tidal currents and water depths and past observation data.

BRIEF DESCRIPTION OF THE DRAWINGS

FIG. 1 is a flowchart schematically illustrating a tidal front estimation method performed by a tidal front estimation apparatus in accordance with an embodiment of the present disclosure;

FIG. 2 is a diagram for describing the tidal front estimation method in accordance with the embodiment of the present disclosure in FIG. 1; and

FIG. 3 is a diagram schematically illustrating the configuration of a tidal front estimation apparatus in accordance with an embodiment of the present disclosure.

DETAILED DESCRIPTION

Singular expressions used herein include plural expressions unless the context clearly indicates otherwise. In the present specification, terms such as "comprise" or "include" should not be construed as necessarily including all of the various components or steps described herein, but should be construed such that some of the components or steps may not be included or additional components or steps may be further included. In addition, terms such as "... part" and "module" described herein refer to a unit that processes at least one function or operation, which may be implemented in hardware or software, or in a combination of hardware and software.

Hereinafter, various embodiments of the present disclosure will be described in detail with reference to the accompanying drawings.

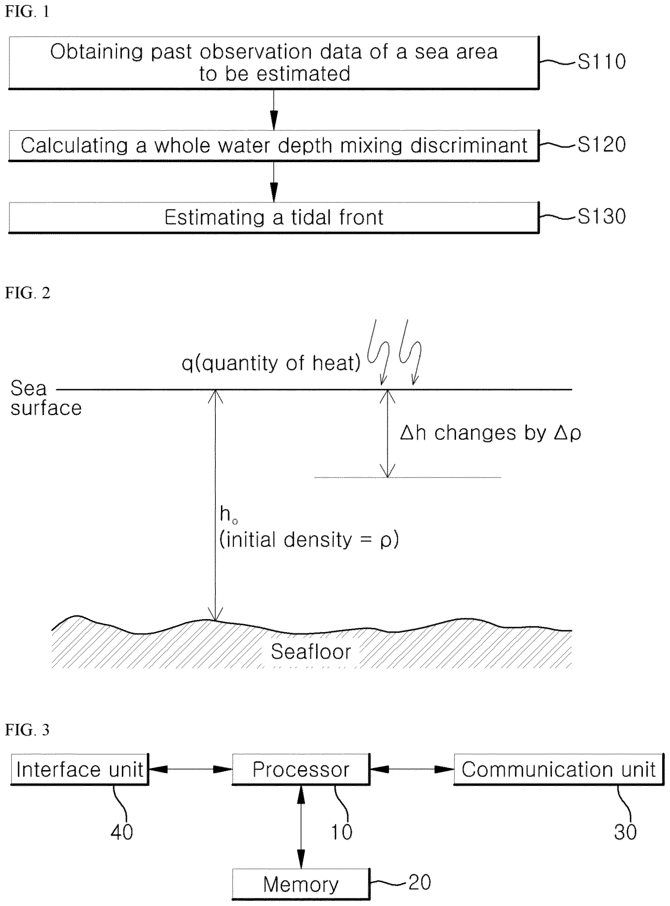

FIG. 1 is a flowchart schematically illustrating a tidal front estimation method performed by a tidal front estimation apparatus in accordance with an embodiment of the present disclosure, and FIG. 2 is a diagram for describing the tidal front estimation method in accordance with the embodiment of the present disclosure in FIG. 1. In the following, the tidal front estimation method in accordance with an embodiment of the present disclosure will be described focusing on FIG. 1, but FIG. 2 will be referred to as well.

In step S110, a tidal front estimation apparatus obtains past observation data of a sea area to be estimated. For example, the tidal front estimation apparatus may obtain past observation data from databases such as the Korea Hydrographic and Oceanographic Agency and the United States Geological Survey (USGS).

In step S120, the tidal front estimation apparatus substitutes and calculates the obtained past observation data into a preset whole water depth mixing discriminant, for a plurality of points in the sea area to be estimated.

Here, the whole water depth mixing discriminant can be set by the relational expression between the flow velocity of a tidal current and a water depth as in the following mathematical expression.

[Mathematical expression 1]

$$\frac{h}{u^3}$$

Here, h is the water depth and u is the flow velocity of the tidal current.

In step S130, the tidal front estimation apparatus, as a result of the calculation, regards the area of points where the calculated value is less than or equal to a preset reference value as a whole water depth mixing sea area, regards the area of points where the calculated value exceeds the preset reference value as a stratified sea area, and estimates the boundary between the regarded whole water depth mixing sea area and stratified sea area as a tidal front.

In the following, the whole water depth mixing discriminant will be described with reference to FIG. 2.

The persistence of tidal fronts may depend on tidal mixing. Thus, referring to FIG. 2, if a q quantity of heat enters seawater, the upper layer from the sea surface to a water depth of $\Delta h$ changes in density by $\Delta\rho$.

It can be assumed that an energy supply of $V_2$-$V_1$ is required in order that the upper layer whose density has changed by $\Delta\rho$ is mixed with the lower layer and a water column down to a water depth of h' has a density of p'. Here, $V_1$ and $V_2$ are the potential energy before and after the mixing of the upper layer and the lower layer, respectively.

Here, $V_1$ = potential energy when the density of the entire water column is $\rho$ - potential energy when the density of the upper layer is smaller by $\Delta\rho$ + atmospheric pressure.

Here, the potential energy when the density of the entire water column is $\rho$ can be represented by the following mathematical expression.

[Mathematical expression 2]

$$\rho g \iiint_{-h}^{0} z\,dz\,dy\,dx = \rho g\,{}^{h^2}\!/_2$$

Next, the potential energy when the density of the upper layer is smaller by $\Delta\rho$ is obtained by subtracting the potential energy of the lower layer from the potential energy when the density of the entire water column is $\Delta\rho$, and can be represented by the following mathematical expression.

[Mathematical expression 3]

$$\Delta\rho g\,{}^{h^2}\!/_2 - \Delta\rho g\,{}^{(h-\Delta h)^2}\!/_2$$

$$= \Delta\rho g\,{}^{h^2}\!/_2 - \Delta\rho g\,{}^{h^2}\!/_2 + \Delta\rho g h\Delta h - \Delta\rho g\,{}^{\Delta h^2}\!/_2$$

Therefore, $V_1$ and $V_2$ can be represented by the following mathematical expression.

[Mathematical expression 4]

$$V_1 = \rho g\,{}^{h^2}\!/_2 + \Delta\rho g h\Delta h - \Delta\rho g\,{}^{\Delta h^2}\!/_2 + P_a h$$

$$V_2 = \rho' g\,{}^{h'^2}\!/_2 + P_a h'$$

Here, assuming Δh << h, $\Delta\rho g \,{}^{\Delta h^2}\!/_2 = 0$ , h=h', and Pa is the atmospheric pressure.

Thus, the difference in potential energy before and after the vertical mixing can be represented by the following mathematical expression.

[Mathematical expression 5]

$$V_2 - V_1 = (\rho' - \rho)g\,{}^{h^2}\!/_2 + \Delta\rho gh\Delta h$$

On the other hand, according to the law of conservation of energy, the following mathematical expression is satisfied.

[Mathematical expression 6]

$$(\rho - \Delta\rho)\Delta h + \rho(h - \Delta h) = \rho' h$$

$$(\rho - \rho')h = \Delta\rho\Delta h$$

Accordingly, the difference in potential energy before and after the vertical mixing can be represented by the following mathematical expression.

[Mathematical expression 7]

$$V_2 - V_1 = -\Delta\rho\Delta h g\,{}^{h}\!/_2 + \Delta\rho gh\Delta h = \Delta\rho\Delta h g\,{}^{h}\!/_2$$

In the following, since the difference in density between the upper layer and the lower layer is due to the difference in quantity of heat, Mathematical expression 7 will be converted into a relational expression in terms of quantities of heat.

In general, a relationship as in the following mathematical expression is established between density $\rho$, temperature T, and quantity of heat Q.

[Mathematical expression 8]

$$Q = C_p\rho_0\Delta h\Delta T$$

$$\rho = \rho_0(1 - \alpha\Delta T) \quad or \quad \Delta\rho = -\alpha\rho_0\Delta T$$

Here, Q is the quantity of heat absorbed per unit area, $C_p$ is the specific heat, $\rho_0$ is the reference density before the temperature change, $\alpha$ is the volume expansion coefficient, and $\Delta T$ is the difference in the temperature change.

According to this relationship, Mathematical expression 7 can be represented as in the following mathematical expression.

[Mathematical expression 9]

$$V_2 - V_1 = \Delta\rho\Delta hg\,{}^h\!/_2$$
$$= -\alpha\rho_0\Delta Tgh\,{}^{\Delta h}\!/_2$$
$$= {}^{-\alpha Qgh}\!/_{2C_p}$$

Thus, the rate of change of potential energy dv/dt can be represented by the following mathematical expression.

[Mathematical expression 10]

$$\frac{dv}{dt} = -\frac{1}{2C_p}\alpha gh\frac{dQ}{dt}$$

For mixing to occur, energy in the amount of Mathematical expression 10 must be supplied continuously. This energy is assumed to be lower-layer turbulence energy caused by tidal currents. The average power contributed by a tidal current with a flow velocity of $u_b$ near the seafloor to the bottom stress $\tau_b$ can be represented by the following mathematical expression.

[Mathematical expression 11]

$$\frac{dE}{dt} = \overline{\tau_b u_b}$$

Here, E is the energy of the water column per unit area, and the overbar ( ‾ ) means the average over time.
Next, the bottom stress $\tau_b$ can be approximated as a quadratic function of the flow velocity as in the following mathematical expression.

[Mathematical expression 12]

$$\tau_b = k\rho_0|u_b|u_b$$

Here, k is a non-dimensional coefficient of friction of a seafloor, and empirically, 0.0025 may be applied.
Therefore, the average power can be the following mathematical expression.

[Mathematical expression 13]

$$\frac{dE}{dt} = \overline{|u_b|^3}\,k\rho_0$$

When $U_b(t) = u_0\cos(wt)$, the following mathematical expression can be given.

[Mathematical expression 14]

$$\overline{|u_b|^3} = \frac{4}{T}\int_0^{T/4} u_0^3\,(\cos\omega t)^3 dt = \frac{4}{3\pi}u_0^3$$

Applying this to the average power, the following mathematical expression can be given.

[Mathematical expression 15]

$$\frac{dE}{dt} = \frac{4}{3\pi} k\rho_0 u_0^3$$

Since not all of this energy contributes to the change in potential energy, the contribution rate $\varepsilon$ is assumed. Then, the following mathematical expression can be given.

[Mathematical expression 16]

$$\frac{dV}{dt} = \epsilon \frac{dE}{dt}$$

$$-\frac{1}{2C_p} \alpha g h \frac{dQ}{dt} = \frac{4\epsilon}{3\pi} k\rho_0 u_0^3$$

From this, the whole water depth mixing discriminant can be derived as in the following mathematical expression.

[Mathematical expression 17]

$$\frac{h}{u_0^3} = -\frac{8k\rho_0 C_p \epsilon}{3\pi\alpha g \, dQ/dt}$$

Therefore, the obtained past observation data of the sea area to be estimated may include the coefficient of friction of the seafloor k, the reference density $\rho_0$ before the temperature change, the specific heat $C_p$, the contribution rate $\varepsilon$, the volume expansion coefficient $\alpha$, and the rate of change in the quantity of heat absorbed per unit area dQ/dt.

FIG. 3 is a diagram schematically illustrating the configuration of a tidal front estimation apparatus in accordance with an embodiment of the present disclosure.

Referring to FIG. 3, the tidal front estimation apparatus in accordance with an embodiment of the present disclosure includes a processor 10, a memory 20, a communication unit 30, and an interface unit 40.

The processor 10 may be a CPU or a semiconductor device that executes processing instructions stored in the memory 20.

The memory 20 may include various types of volatile or non-volatile storage media. For example, the memory 20 may include ROM, RAM, etc.

For example, the memory 20 may store instructions for performing the tidal front estimation method in accordance with the embodiment of the present disclosure.

The communication unit 30 is a means for transmitting and receiving data to and from other devices via a communication network.

The interface unit 40 may include a network interface and a user interface for accessing the network.

Meanwhile, the components of the embodiments described above can be readily understood from a process-wise perspective. In other words, each component can be understood as each process. Further, the processes of the embodiments described above can be readily understood from the perspective of the components of the apparatus.

Moreover, the technical details described above may be implemented in the form of program instructions that can be executed via various computer means and recorded on a computer-readable medium. The computer-readable medium may include program instructions, data files, data structures, etc., alone or in combination. The program instructions recorded on the medium may be those specially designed and configured for the embodiments or may be those known and available to persons skilled in the art of computer software. Examples of the computer-readable recording media include magnetic media such as hard disks, floppy disks, and magnetic tapes, optical media such as CD-ROMs and DVDs, magneto-optical media such as floptical disks, and hardware devices specially configured to store and execute program instructions, such as ROM, RAM, flash memory, etc. Examples of the program instructions include not only machine language code, such as that created by a compiler, but also high-level language code that can be executed by a computer using an interpreter or the like. The hardware devices may be configured to operate as one or more software modules, and vice versa, to perform the operations of the embodiments.

The embodiments of the present disclosure described above have been disclosed for purposes of illustration, those skilled in the art who have common knowledge of the present disclosure will be able to make various modifications, changes, and additions within the spirit and scope of the present disclosure, and such modifications, changes, and additions are to be considered as falling within the scope of the patent claims below.

**Claims**

1. A method of estimating a tidal front, performed by an apparatus for estimating a tidal front, comprising:

    obtaining past observation data of a sea area to be estimated;
    substituting and calculating the obtained past observation data into a preset whole water depth mixing discriminant, for a plurality of points in the sea area to be estimated; and
    as a result of the calculation, regarding an area of points where a calculated value is less than or equal to a preset reference value as a whole water depth mixing sea area, regarding an area of points where the calculated value exceeds the preset reference value as a stratified sea area, and estimating a boundary between the regarded whole water depth mixing sea area and stratified sea area as a tidal front.

2. The method of claim 1, wherein the obtained past observation data comprises a coefficient of friction of a seafloor in the sea area to be estimated, a reference density before a temperature change, a specific heat, a contribution rate, a volume expansion coefficient, and a rate of change of a quantity of heat absorbed per unit area.

3. The method of claim 1, wherein the whole water depth mixing discriminant is set by the following mathematical expression, which is a relational expression between a flow velocity of a tidal current and a water depth:

$$\frac{h}{u^3},$$

where h is the water depth and u is the flow velocity of the tidal current.

4. The method of claim 1, wherein the calculated value of the whole water depth mixing discriminant is calculated by the following mathematical expression:

$$\frac{h}{u_0^3} = -\frac{8k\rho_0 C_p \epsilon}{3\pi\alpha g\, dQ/dt},$$

where k is a coefficient of friction of a seafloor, $\rho_0$ is a reference density before a temperature change, $C_p$ is a specific heat, $\epsilon$ is a contribution rate, $\alpha$ is a volume expansion coefficient, g is a gravitational acceleration, and dQ/dt is a rate of change of a quantity of heat absorbed per unit area.

5. An apparatus for estimating a tidal front, comprising:

    a memory configured to store instructions; and
    a processor configured to execute the instructions,
    wherein the instructions perform a method of estimating a tidal front comprising:

        obtaining past observation data of a sea area to be estimated;
        substituting and calculating the obtained past observation data into a preset whole water depth mixing discriminant, for a plurality of points in the sea area to be estimated; and
        as a result of the calculation, regarding an area of points where a calculated value is less than or equal to a preset reference value as a whole water depth mixing sea area, regarding an area of points where the calculated value exceeds the preset reference value as a stratified sea area, and estimating a boundary between the regarded whole water depth mixing sea area and stratified sea area as a tidal front.

EP 4 538 637 A1

FIG. 1

| Obtaining past observation data of a sea area to be estimated | ~S110 |

↓

| Calculating a whole water depth mixing discriminant | ~S120 |

↓

| Estimating a tidal front | ~S130 |

FIG. 2

q(quantity of heat)

Sea surface

$\Delta h$ changes by $\Delta \rho$

$h_o$
(initial density = $\rho$)

Seafloor

FIG. 3

| Interface unit | ↔ | Processor | ↔ | Communication unit |

40            10            30

↕

| Memory | ~20 |

**EUROPEAN SEARCH REPORT**

Europäisches
Patentamt
European
Patent Office
Office européen
des brevets

Application Number

EP 24 19 4761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEEHAN PETER M. ET AL: "Shelf sea tidal currents and mixing fronts determined from ocean glider observations", OCEAN SCIENCE, vol. 14, no. 2, 15 March 2018 (2018-03-15), pages 225-236, XP093250548, ISSN: 1812-0792, DOI: 10.5194/os-14-225-2018 * the whole document * | 1-5 | INV. G01C13/00 ADD. G01W1/10 |
| A | SIMPSON J. H. ET AL: "Fronts in the Irish Sea", NATURE, vol. 250, 2 August 1974 (1974-08-02), pages 404-406, XP093250553, * the whole document * | 2,4 | |

TECHNICAL FIELDS
SEARCHED (IPC)

G01C
G01W

The present search report has been drawn up for all claims

| Place of search | Date of completion of the search | Examiner |
|---|---|---|
| The Hague | 14 February 2025 | Faivre, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- KR 1020230135874
- KR 1020230055765